# EUROPÄISCHE PATENTSCHRIFT

(11) **EP 3 567 678 B1**
(45) Veröffentlichungstag und Bekanntmachung des Hinweises auf die Patenterteilung: **13.07.2022**
(21) Anmeldenummer: 19167760.8
(22) Anmeldetag: 08.04.2019
(51) Int. Cl.: H01R 4/30, F16B 37/00, H01R 4/34, H01R 9/24, H01R 11/12

(54) **VORRICHTUNG ZUR KONTAKTVERSCHRAUBUNG, ELEKTRISCHE MASCHINE MIT VORRICHTUNG ZUR KONTAKTVERSCHRAUBUNG UND KONTAKTVERSCHRAUBUNG**
DEVICE FOR CONTACT SCREWING, ELECTRIC MACHINE WITH DEVICE FOR CONTACT SCREWING AND CONTACT SCREWING
DISPOSITIF DE VISSAGE DE CONTACT, MACHINE ÉLECTRIQUE AVEC DISPOSITIF DE VISSAGE DE CONTACT ET DISPOSITIF DE VISSAGE DE CONTACT

(30) Priorität: 09.05.2018 DE 102018207226
(43) Veröffentlichungstag der Anmeldung: 13.11.2019
(73) Patentinhaber: VOLKSWAGEN AKTIENGESELLSCHAFT, 38440 Wolfsburg (DE)
(72) Erfinder: Lenz, Andreas, 34466 Wolfhagen (DE); Zeise, Dirk, 34127 Kassel (DE)

(56) Entgegenhaltungen:
- EP-A1- 0 749 179
- DE-A1-102014 010 374
- DE-A1-102014 116 662
- DE-B3-102004 046 808
- DE-T5-112015 003 297
- JP-A- 2013 077 687
- US-A1- 2004 214 477
- US-A1- 2007 059 994
- US-A1- 2011 243 683

## Beschreibung

Die vorliegende Erfindung betrifft eine Vorrichtung zur Herstellung einer Kontaktverschraubung, insbesondere einer Hochvolt-Kontaktverschraubung, für eine elektrische Maschine, umfassend einen Halter mit einer Aufnahme und eine Verliersicherung, wobei in der Aufnahme ein Gewindestück mindestens in einer Axialrichtung des Gewindestücks verschiebbar gehalten ist, wobei das Gewindestück mittels der Verliersicherung verliersicher in der Aufnahme gehalten ist. Ferner betrifft die vorliegende Erfindung eine elektrische Maschine mit einer Vorrichtung zur Kontaktverschraubung und eine Kontaktverschraubung.

### Technologischer Hintergrund

In vielen technischen Gebieten finden elektrische Maschinen, insbesondere Elektromotoren, Anwendung. Insbesondere in der Kraftfahrzeugindustrie beziehungsweise im Kraftfahrzeugbau werden elektrische Maschinen in Elektroantrieben von Elektrofahrzeugen oder Hybridfahrzeugen eingesetzt. Aufgrund von Bauraumrestriktionen müssen die elektrischen Maschinen von Elektroantrieben in Kraftfahrzeugen sehr kompakt gebaut sein. Dies führt oft dazu, dass die Zuleitungen für den Stator der elektrischen Maschine sehr kurz und weniger flexibel sind. Die Zuleitungen des Stators müssen über Kabelschuhe mit rechtwinklig dazu verlaufenden elektrischen Anschlüssen, insbesondere mit Kontaktschienen eines Pulsrichters, verbunden werden. Diese Verbindung wird oft über Schraubverbindungen hergestellt. Die elektrischen Anschlüsse werden in einem nicht elektrisch leitfähigen Halter fixiert und auf Abstand gehalten, um einen Kurzschluss zu vermeiden. Aufgrund von Toleranzen der Bauteile, Variationen der Länge der Zuleitungen des Stators oder durch Verformungen, ist eine genaue Positionierung der elektrischen Anschlüsse, der Zuleitungen für den Stator oder der Kabelschuhe nicht problemlos möglich. Dies kann dazu führen, dass es bei einer in einem Halter für eine Kontaktverschraubung eingegossenen Mutter zu Spannungen der Verschraubstelle, der Zuleitungen oder des Halters kommen kann. Ferner führt der begrenzte Bauraum dazu, dass das Einsetzen der Muttern und die Herstellung der Schraubverbindung schwierig ist, sodass es auch zu einem Verlust der Muttern beziehungsweise Schrauben der Schraubverbindung bei der Montage kommen kann.

Aus der US 2007/0059994 A1 ist eine Vorrichtung zur Kontaktverschraubung von elektrisch leitenden Leitungen bekannt. Die Vorrichtung umfasst einen Halter mit einem Innenraum, wobei der Innenraum in einer Querschnittsansicht eine Vielrundform aufweist. In dem Innenraum ist ein Gewindestück mit einem Innengewinde angeordnet, wobei das Gewindestück ein der Vielrundform des Halters entsprechendes Profil aufweist. Durch einen in dem Innenraum angeordneten Stopfen wird das Gewindestück im Halter fixiert. In einer hergestellten Schraubverbindung wird das Gewindestück in dem Halter durch einen Anschlag gegen den Halter fixiert.

Die DE 26 57 222 C3 offenbart eine Blindmutter zum schraubbaren Verbinden von zwei jeweils mit einer Bohrung versehenen Werkstücken. Die Blindmutter umfasst einen in eine Bohrung eines der Werkstücke einsetzbaren nachgiebigen Käfig, der an seinem dem Einführungsende abgekehrten Ende mit einem nach außen weisenden Flansch versehen ist und der in einer Bohrung eine eingesetzte Mutter in Bereitschaftsstellung hält. Aufgrund von wenigstens vier in Umfangsrichtung zum Flansch hin offenen V-förmigen Schlitzen ist der Käfig flexibel ausgebildet, sodass dieser in der Bohrung des Werkstücks eingeklemmt werden kann.

Die US 3,504,723 A offenbart eine in einem Käfig gehaltene, im Wesentlichen eine quadratische Profilform aufweisende Mutter. In einer hergestellten Schraubverbindung wird die Mutter in dem Käfig durch einen Anschlag gegen den Käfig fixiert.

Aus der DE 11 2015 003 297 T5 ist eine Anschlussbasis bekannt, die es ermöglicht, dass ein spulenseitiger Anschluss mit einem wechselrichterseitigen Leitungselement von der Außenseite eines Gehäuseteils verbunden ist. Ein inneres Schraubenelement ist beweglich innerhalb eines axialen Bewegungsraumes eines Anschlussbasis-Grundkörpers angeordnet.

Die EP 0 749 179 A1 offenbart eine Schraubklemme für einen elektrischen Anschluss von insbesondere mit ösenförmigen Kabelschuhen ausgestatteten Drähten, mit einem Gehäuse und einer Klemmschraube, welche in Einschraubrichtung eine erste und bei geschlossener Klemme eine zweite Klemmplatte durchsetzt, wobei die Klemmschraube in einem Halsbereich, dessen axiale Länge wenigstens der Dicke der ersten Klemmplatte entspricht, und einem Endbereich ihres Gewindeschafts im Wesentlichen auf den Kerndurchmesser des Gewindeschaftes abgesetzt ist und der Öffnungsweg der beiden Klemmplatten anschlagsbegrenzt ist.

Die DE 10 2014 116 662 A1 offenbart ein elektrisches Anschlussbaugruppensystem. Dieses weist ein erstes Anschlussblech mit einem ersten Anschlussende und wenigstens einem ersten Fußabschnitt auf, sowie eine erste Schraubenmutter und einen dielektrischen Halter. Der dielektrische Halter besitzt einen ersten Aufnahmebereich zur Aufnahme der ersten Schraubenmutter.

Die DE 10 2004 046 808 B3 beschreibt ein Anschlussteil umfassend einen Kunststoffkörper und mindestens ein elektrisches Anschlusselement mit einem Befestigungsbereich, das in den Kunststoffkörper eingespritzt ist, und mit einer Anschlusslasche, die eine Ausnehmung für ein Schraubverbindungselement hat. Ein korrespondierendes Verbindungselement ist in einen Aufnahmeraum unterhalb der Anschlusslasche einbringbar. Mindestens ein Rastelement hält das korrespondierende Verbindungselement in seinem eingeschobenen Zustand verliersicher in dem Aufnahmeraum.

Aus der US 2004/214477 A1 ist eine Vorrichtung nach dem Oberbegriff des Anspruchs 1 bekannt, die eine Anschlussplatine umfasst, bei der ein erstes Verbindungselement einer Stromzuführseite und ein zweites Verbindungselement einer stromempfangenden Seite elektrisch miteinander verbunden sind. Ein erstes Befestigungselement ist in einer Kammer angeordnet und ausgebildet, zusammen mit einem zweiten Befestigungselement das erste und das zweite Verbindungselement aneinander zu befestigen.

Aus der DE 10 2014 010 374 A1 ist ein metallener Laststromkontakt zur elektrisch leitenden Befestigung an einer Leiterplatte bekannt, wobei der Laststromkontakt einen Grundkörper mit einer planen Unterseite aufweist, wobei der Laststromkontakt mit der planen Unterseite an einer Leiterplatte elektrisch leitend befestigt werden kann, und wobei der Laststromkontakt eine sich von einer, von der Unterseite verschiedenen Oberfläche des Grundkörpers erstreckende Anschlussmöglichkeit für einen Kabelschuh aufweist.

Die US 2011/0243683 A1 offenbart eine Befestigungsanordnung zur Befestigung eines Befestigungselements umfassend eine Basis und eine Ausnehmung, die in der Basis ausgebildet ist. Die Ausnehmung hat eine im Wesentlichen nicht kreisförmige Querschnittsform. Die Befestigungsanordnung umfasst außerdem einen Einsatz, der in der Ausnehmung positioniert werden kann. Der Einsatz hat eine im Wesentlichen nicht kreisförmige Querschnittsform, die der nicht kreisförmigen Querschnittsform der Aussparung Ausnehmung entspricht.

Im Stand der Technik sind Muttern beziehungsweise Gewindestücke oft in einem isolierenden Kunststoffhalter fest vergossen oder werden gegen einen festen Anschlag angezogen. Die Gefahr eines Verlustes der Gewindestücke beim Einsetzen und das Auftreten von Verspannungen sind aber weiterhin ungelöste Probleme. Insbesondere kann es bei der Fixierung der Kontaktverbindung zu Positionsabweichungen und somit zu Verspannungen der Bauteile kommen. Im Stand der Technik wurde versucht, diese Probleme zu überwinden, indem längere Zuleitungen zum Stator vorgesehen werden. Hierdurch werden die Anschraubpunkte flexibler und bei parallel verlaufenden elektrischen Anschlüssen, wie beispielsweise Kontaktschienen für einen Pulswechselrichter, können Abweichungen durch in den elektrischen Anschlüssen angeordnete Langlöcher ausgeglichen werden. Die mit den Bauraumrestriktionen verbundenen Probleme werden jedoch auch durch diese Maßnahmen nicht überwunden.

### Darstellung der Erfindung: Aufgabe, Lösung, Vorteile

Es ist Aufgabe der vorliegenden Erfindung, eine Vorrichtung zur Kontaktverschraubung, insbesondere Hochvolt-Kontaktverschraubung für eine elektrische Maschine, bereitzustellen, bei der mechanische Verspannungen verringert werden und welche einfach zu verbauen ist. Ferner ist es Aufgabe der Erfindung, eine elektrische Maschine bereitzustellen, mit welcher die vorgenannten Vorteile erzielt werden.

Zur Lösung der der Erfindung zugrundeliegenden Aufgabe wird eine Vorrichtung nach Anspruch 1 zur Herstellung einer Kontaktverschraubung, insbesondere einer Hochvolt-Kontaktverschraubung für eine elektrische Maschine, umfassend einen Halter mit einer Aufnahme und eine Verliersicherung, wobei in der Aufnahme ein Gewindestück mindestens in einer Axialrichtung des Gewindestücks verschiebbar gehalten ist, wobei das Gewindestück mittels der Verliersicherung verliersicher in der Aufnahme gehalten ist, vorgeschlagen, wobei die Vorrichtung derart ausgebildet ist, dass das Gewindestück in der hergestellten Kontaktverschraubung gegenüber der Vorrichtung verschiebbar ist, wobei die Aufnahme in einer Querschnittsebene ein Innenmitnahmeprofil aufweist, wobei das Innenmitnahmeprofil ein Innenvielrundprofil ist, wobei das Gewindestück eine Hülse mit einer Innenbohrung und einem in der Innenbohrung angeordneten Innengewinde ist, wobei das Gewindestück in einer Querschnittsebene ein Außenmitnahmeprofil aufweist, wobei das Außenmitnahmeprofil ein Außenvielrundprofil ist, wobei das Außenmitnahmeprofil eine zu dem Innenmitnahmeprofil im Wesentlichen komplementäre Form aufweist, wobei die Aufnahme in einer Längsrichtung in Richtung einer Oberseite des Halters sich erweiternd ausgebildet ist, und wobei der Durchmesser des Gewindestücks in der Längsrichtung gesehen zunimmt.

Die herzustellende Kontaktverschraubung kann eine Kontaktverschraubung zwischen einem elektrischen Anschluss, insbesondere einer Kontaktschiene, und einer Zuleitung eines Stators sein.

Zur Herstellung der Kontaktverschraubung, das heißt der elektrisch leitenden Verbindung der elektrischen Anschlüsse mit den Zuleitungen des Stators, ist ferner bevorzugt eine Schraube vorgesehen, welche in das Gewindestück eingeschraubt ist.

Bevorzugt wird eine Endposition des Gewindestücks in der hergestellten Kontaktverschraubung durch die verschraubten Elemente, zum Beispiel den elektrischen Anschluss, insbesondere die Kontaktschiene, und die Zuleitung des Stators, begrenzt und nicht durch den Halter. Insbesondere weist das Gewindestück in der Endposition eine Beweglichkeit in der Aufnahme auf. Mit anderen Worten, auch nachdem die Kontaktverschraubung hergestellt ist, bleibt die Kontaktverschraubung, das heißt die fest miteinander verbundenen Elemente elektrischer Anschluss, Gewindestück, Zuleitung des Stators und gegebenenfalls Schraube, gegenüber der Vorrichtung verschiebbar. Die Kontaktverschraubung bzw. deren Elemente bleibt bzw. bleiben während des Verschraubens, im Betrieb und beim Lösen, insbesondere gegenüber der Vorrichtung, weiter insbesondere gegenüber dem Halter, verschiebbar.

Dadurch, dass das Gewindestück in der Aufnahme verliersicher und in einer Axialrichtung des Gewindestücks verschiebbar gehalten ist, wird es möglich, Toleranzen der Bauteile, zum Beispiel hinsichtlich der Länge der Zuleitungen des Stators auszugleichen, sodass eine genaue Positionierung der Zuleitungen und der mit diesen zu verbindenden elektrischen Anschlüsse, insbesondere einer Kontaktschiene eines Pulswechselrichters, ermöglicht wird. Ferner können Verspannungen der Bauteile vermieden werden. Hierbei ist es von besonderem Vorteil, dass das Gewindestück verliersicher mittels der Verliersicherung in dem Halter gehalten ist. Dies ermöglicht es, die Vorrichtung zur Kontaktverschraubung vor dem Einbau in die elektrische Maschine herzustellen, sodass das Einsetzen des Gewindestücks nicht erst beim Einbau in die elektrische Maschine stattfinden muss. Hierdurch kann verhindert werden, dass das Gewindestück beim Einbau verloren geht. Die Montage wird somit vereinfacht.

Bevorzugt ist vorgesehen, dass die Verliersicherung lösbar ausgebildet ist, sodass das Gewindestück durch Anwendung einer vorbestimmten Kraft in der Axialrichtung von der Verliersicherung gelöst werden kann.

Dies hat den Vorteil, dass die axiale Beweglichkeit des Gewindestücks in der Einbausituation bzw. der Endposition in der hergestellten Kontaktverschraubung, das heißt nach der Montage der Vorrichtung an eine elektrische Maschine, nicht mehr durch die Verliersicherung begrenzt ist. So können auch größere Toleranzen der einzelnen Bauteile ausgeglichen werden, ohne dass die Verliersicherung diesem Ausgleich entgegensteht. In der Einbausituation, das heißt nach der Montage und der Herstellung der elektrischen Verbindung von elektrischen Anschlüssen mit den Zuleitungen des Stators, wird das Gewindestück durch die Verbindung, insbesondere die Kontaktverschraubung, gehalten, sodass die Verliersicherung in der Einbausituation nicht mehr nötig ist. Das Gewindestück hat somit in der Einbauposition bzw. der Endposition eine Beweglichkeit in der Aufnahme, bzw. gegenüber dem Halter.

Durch die Verliersicherung wird der Verlust des Gewindestücks bei der Montage und dem Transport der Vorrichtung vermieden. Die vorbestimmte Kraft wird dabei so gewählt, dass diese größer ist als die Gewichtskraft des Halters beziehungsweise der Vorrichtung oder des Gewindestücks, gegebenenfalls mit einem Sicherheitszuschlag. Insbesondere ist die vorbestimmte Kraft so gewählt, dass bei einem Transport auftretende Erschütterungen nicht dazu führen, dass das Gewindestück aus der Aufnahme herausfallen kann.

Bevorzugt ist vorgesehen, dass das Gewindestück in der hergestellten Kontaktverschraubung nicht gegen einen Anschlag der Vorrichtung festgezogen ist.

Bevorzugt ist die Vorrichtung zur Kontaktverschraubung an einer elektrischen Maschine eines Kraftfahrzeugs, insbesondere eines Elektrofahrzeugs oder eines Hybridfahrzeugs, angeordnet.

Bevorzugt ist vorgesehen, dass die Verliersicherung eine Anformung an den Halter ist, und/oder dass die Verliersicherung flexibel und/oder elastisch ausgebildet ist, und/oder dass die Verliersicherung ausgebildet ist, unter Anwendung der vorbestimmten Kraft zu brechen.

Die Anformung an den Halter kann stoffschlüssig oder einstückig mit dem Halter ausgebildet sein. Grundsätzlich ist es aber auch möglich, dass die Anformung bzw. die Verliersicherung als separates Bauteil mit dem Halter verbunden wird. Besonders bevorzugt ist es, wenn die Verliersicherung flexibel oder elastisch ausgebildet ist, wobei die Verliersicherung das Gewindestück beim Aufbringen der vorbestimmten Kraft aufgrund deren Elastizität oder Flexibilität freigibt, und/oder dass es möglich wird, das Gewindestück an der Verliersicherung vorbeizuführen. Die Verliersicherung kann auch verformbar ausgebildet sein, sodass bei Aufbringen der vorbestimmten Kraft eine Verformung der Verliersicherung stattfindet, durch welche das Gewindestück freigegeben wird, beziehungsweise sodass das Gewindestück an der Verliersicherung vorbeiführbar ist. Eine weitere Möglichkeit besteht darin, dass die Verliersicherung, insbesondere an einer Sollbruchstelle, bei Aufbringen der vorbestimmten Kraft bricht und dass dadurch das Gewindestück freigegeben wird und aus der Aufnahme herausgleiten kann.

Mit besonderem Vorteil ist vorgesehen, dass die Verliersicherung als mindestens eine Rastzunge mit einer Rastnase ausgebildet ist.

Rastzungen mit Rastnasen sind besonders einfach als Anformungen, insbesondere als stoffschlüssige Anformungen, an dem Halter ausbildbar. In der Regel weisen derartige Rastzungen eine ausreichende oder vorbestimmbare Flexibilität auf, um die Lösbarkeit der Verliersicherung zu gewährleisten. Für den besonderen Fall, dass die Verliersicherung ausgebildet ist, bei Anwendung der vorbestimmten Kraft zu brechen, kann die Sollbruchstelle an einer Basis, insbesondere an der Verbindungsstelle der Verliersicherung mit dem Halter, oder an der Rastnase ausgebildet sein.

Mit weiterem Vorteil kann vorgesehen sein, dass die Aufnahme in dem Halter angeordnet ist, und/oder dass die Aufnahme eine Aussparung und/oder ein Durchbruch und/oder eine Bohrung und/oder ein Sackloch, insbesondere eine Sackbohrung, ist.

Die Aufnahme ist insbesondere so ausgebildet, dass sie eine Aussparung oder ein offener Durchbruch in dem Halter ist. Bevorzugt ist der Halter ein Spritzgussbauteil. Durch Ausgestaltung des Halters als ein Spritzgussbauteil wird es möglich, die Aufnahme für das Gewindestück bereits beim Herstellungsvorgang des Halters, beziehungsweise der Vorrichtung zur Kontaktverschraubung, auszubilden.

Erfindungsgemäß ist vorgesehen, dass die Aufnahme in einer Querschnittsebene ein Innenmitnahmeprofil aufweist, wobei das Innenmitnahmeprofil ein Innenvielrundprofil ist. Bevorzugt ist das Innenvielrundprofil ein Innensechsrundprofil.

Durch die Bereitstellung eines Innenmitnahmeprofils in der Aufnahme wird eine Kontur bereitgestellt, an der das in der Aufnahme angeordnete Gewindestück abgestützt werden kann, wenn auf das Gewindestück ein Drehmoment zum Verschrauben und/oder Lösen wirkt. Das Innenmitnahmeprofil hat daher bevorzugt mindestens eine Fläche zur Abstützung eines Drehmoments.

Derartige Innenvielrundprofile können beispielsweise als Innensechsrundprofil ausgebildet sein, wie beispielsweise das im Stand der Technik bekannte Torx-Profil oder Torx-Plus-Profil.

Bevorzugt ist das Gewindestück in der Aufnahme derart angeordnet, dass eine leichte Verschiebbarkeit gewährleistet wird und/oder dass leichte Winkelabweichungen beziehungsweise geringfügige Drehungen des Gewindestücks in der Aufnahme möglich sind.

Ferner ist vorgesehen, dass die Aufnahme in einer Längsrichtung sich erweiternd ausgebildet ist.

Dabei erweitert sich die Aufnahme in Richtung einer Oberseite des Halters, von der aus eine Schraube in das Gewindestück eingeführt werden kann. Durch die sich erweiternde Ausgestaltung vergrößert sich die Aufnahme beziehungsweise der Innenraum der Aufnahme im Querschnitt in Richtung der Oberseite des Halters, sodass das in der Aufnahme angeordnete Gewindestück in der Nähe der Oberseite des Halters eine größere Beweglichkeit oder Verschiebbarkeit in einer Radialrichtung oder bezüglich einer Drehung aufweisen kann. In dem der Oberseite des Halters abgewandten Bereich der Aufnahme verkleinert sich der Querschnitt des Innenraums der Aufnahme, sodass das Gewindestück, wenn es in diesem Bereich zumindest abschnittsweise angeordnet ist, weniger Bewegungsfreiraum hat oder in einem festen oder direkten physischen Kontakt mit dem Halter steht.

Diese Ausgestaltung hat den Vorteil, dass bei der Herstellung der elektrischen Verbindung zwischen dem elektrischen Anschluss, insbesondere der Kontaktschiene, und der Zuleitung für den Stator, insbesondere einem Kabelschuh für die Zuleitung, das Gewindestück in Richtung der Oberseite durch Einschrauben der Schraube von der Oberseite des Halters aus der Aufnahme herausgeführt wird und eine stetig größer werdende Bewegungsfreiheit erhält. Durch die größer werdende Bewegungsfreiheit können Toleranzen bezüglich der Vorrichtung, der Kontaktschiene oder der Zuleitung des Stators beziehungsweise dessen Kabelschuhs besser ausgeglichen werden. Mit besonderem Vorteil vergrößert sich ein Durchmesser der Aufnahme in einer Längsrichtung gesehen (Formschräge). Der Durchmesser kann beliebig gewählt werden, muss aber für die Beurteilung dessen Zunahme in der Längsrichtung hinsichtlich des Querschnitts der Aufnahme konstant gehalten werden.

Erfindungsgemäß nimmt der Durchmesser des Gewindestücks in der Längsrichtung gesehen zu.

Zudem ist erfindungsgemäß vorgesehen, dass das Gewindestück eine Hülse mit einer Innenbohrung und einem in der Innenbohrung angeordneten Innengewinde ist. Weiter ist vorgesehen, dass das Gewindestück in einer Querschnittsebene ein Außenmitnahmeprofil aufweist, wobei das Außenmitnahmeprofil ein Außenvielrundprofil ist. Dabei kann das Außenvielrundprofil bevorzugt ein Außensechsrundprofil sein. Erfindugnsgemäß weist das Außenmitnahmeprofil eine zu dem Innenmitnahmeprofil im Wesentlichen komplementäre Form auf.

In die Innenbohrung des Gewindestücks kann eine Schraube eingeführt werden. Ist zwischen der Schraube, insbesondere einem Kopf der Schraube, und dem Gewindestück ein elektrischer Anschluss, insbesondere eine Kontaktschiene und/oder eine Zuleitung des Stators, bevorzugt ein, insbesondere abgewinkelter, Abschnitt eines Kabelschuhs für eine Zuleitung eines Stators, angeordnet, so werden die Zuleitung oder der abgewinkelte Abschnitt des Kabelschuhs und der elektrische Anschluss durch Festziehen der Schraube in einen elektrisch leitfähigen Kontakt gebracht. Die Zuleitung, insbesondere der abgewinkelte Abschnitt des Kabelschuhs, und der elektrische Anschluss, insbesondere die Kontaktschiene, sind zwischen der Hülse beziehungsweise dem Gewindestück und dem Kopf der Schraube eingeklemmt. Durch die axiale Verschiebbarkeit und die Möglichkeit der Lösung der Verliersicherung können der abgewinkelte Abschnitt des Kabelschuhs und der elektrische Anschluss ohne Verspannungen miteinander verbunden werden. Dabei verbleibt bevorzugt ein unterer Bereich des Gewindestücks auch nach dem Lösen der Verliersicherung in der Aufnahme, sodass das Gewindestück an dem Innenmitnahmeprofil der Aufnahme zur Drehmomentabstützung abgestützt werden kann. Jedoch kann das Gewindestück in diesem Zustand zumindest teilweise aus der Aufnahme aufgrund der Schraubverbindung herausgeführt sein. Dies hat den Vorteil, dass insbesondere bei einer sich in der Längsrichtung zur Oberseite des Halters erweiternd ausgebildeten Aufnahme die Bewegungsfreiheit für das Gewindestück zunimmt, sodass die Toleranzen bei der Verschraubung von elektrischem Anschluss und Zuleitung zum Stator besser ausgeglichen werden können.

Erfindungsgemäß ist das Außenmitnahmeprofil im Wesentlichen komplementär zu dem Innenmitnahmeprofil ausgebildet. Erfindungsgemäß ist das Außenmitnahmeprofil als Außenvielrundprofil, besonders bevorzugt als Außensechsrundprofil, ausgebildet.

Auch hierfür kann die Ausgestaltung als Torx oder Torx-Plus-Profil vorgesehen werden. Sind das Innenmitnahmeprofil und das Außenmitnahmeprofil komplementär zueinander ausgebildet und insbesondere als Torx-Profil ausgebildet, so liegen die Berührflächen des Außenmitnahmeprofils und des Innenmitnahmeprofils bei einem Drehmomenteintrag parallel aneinander an, sodass eine senkrechte Drehmomenteintragung stattfindet. Hierdurch wird die Flächenpressung gering gehalten, und eine besonders günstige Drehmomenteintragung wird ermöglicht.

Ferner kann vorgesehen sein, dass das Innengewinde nicht über die vollständige Länge der Innenbohrung angeordnet ist, und/oder dass das Innengewinde eine Gewindefreimachung aufweist.

Das Innengewinde des Gewindestücks weist somit bevorzugt einen Abstand von einer Einführöffnung für eine Schraube des Gewindestücks auf. Das heißt, dass die Schraube beim Einschrauben eine Mindeststrecke in den Innenraum des Gewindestücks eingeführt werden muss, bevor die Schraube mit dem Innengewinde in Kontakt kommt. Durch diese Maßnahme wird der Abstand zwischen einem Kopf der Schraube und dem Innengewinde vergrößert. Das heißt, dass die Klemmlänge vergrößert wird und eine größere Klemmkraft eingebracht werden kann. Ferner wird es durch das tiefer in der Innenbohrung des Gewindestücks angeordnete Innengewinde möglich, die Schraube besser in der Innenbohrung zu zentrieren beziehungsweise zu positionieren.

Weiter vorteilhaft kann vorgesehen sein, dass der Halter mindestens zwei, bevorzugt drei, Aufnahmen und mindestens zwei, bevorzugt drei, jeweils in einer Aufnahme angeordnete Gewindestücke aufweist.

Mit weiterem Vorteil kann vorgesehen sein, dass der Halter zwischen mindestens einer ersten Aufnahme und einer zweiten Aufnahme, bevorzugt als Rippen oder Trennwände ausgebildete, Abstandshalter aufweist.

Die Abstandshalter sind bevorzugt dazu vorgesehen, mehrere elektrische Anschlüsse, insbesondere Kontaktschienen, an dem Halter der Vorrichtung zur Kontaktverschraubung elektrisch voneinander zu isolieren.

Vorteilhaft ist vorgesehen, dass der Halter, bevorzugt als Vorsprünge ausgebildete, Zwangsführungen für elektrische Anschlüsse, insbesondere für Kontaktschienen, aufweist.

Durch die Zwangsführung für die elektrischen Anschlüsse wird eine Montage der elektrischen Anschlüsse, insbesondere der Kontaktschienen, vereinfacht. Beim Anordnen der elektrischen Anschlüsse beziehungsweise der Kontaktschienen an die Vorrichtung werden diese durch die Zwangsführungen positioniert, sodass eine einfache Montage ermöglicht wird.

Mit weiterem Vorteil ist vorgesehen, dass die Zwangsführung eine gegenüber einer Oberseite des Halters geneigte Führungsfläche aufweist.

Werden die elektrischen Anschlüsse, insbesondere die Kontaktschienen, parallel zu der Oberseite des Halters auf den Halter beziehungsweise in die Verschraubungsposition geschoben, so führt die geneigte Führungsfläche dazu, dass die Kontaktschienen bezüglich ihres Abstandes von der Oberseite des Halters positioniert werden und es nicht zu Blockaden kommt.

Eine weitere Lösung der der Erfindung zugrundeliegenden Aufgabe besteht in einer elektrischen Maschine nach Anspruch 8 umfassend eine vorbeschriebene Vorrichtung zur Kontaktverschraubung.

Mit Vorteil kann vorgesehen sein, dass ein elektrischer Anschluss, insbesondere eine Kontaktschiene, bevorzugt eine Kontaktschiene für einen Pulswechselrichter, mittels einer in dem Gewindestück des Halters angeordneten Schraube an dem Halter befestigt ist, wobei der elektrische Anschluss zwischen einem Kopf der Schraube und dem Gewindestück angeordnet ist.

Mit weiterem Vorteil ist vorgesehen, dass der Halter einen Kabelschuh aufweist, wobei eine elektrische Zuleitung der elektrischen Maschine, insbesondere eines Stators, in dem Kabelschuh angeordnet ist, wobei ein abgewinkelter Abschnitt des Kabelschuhs zwischen einem Kopf der Schraube und dem Gewindestück angeordnet ist, sodass ein elektrischer Kontakt zwischen dem Kabelschuh und dem elektrischen Anschluss vorhanden ist.

Vorteilhaft kann vorgesehen sein, dass der elektrische Anschluss eine Freimachung, insbesondere eine Aussparung oder Bohrung, aufweist, wobei ein Abschnitt der Zwangsführung in die Freimachung eingreift, so dass ein Verrutschen des elektrischen Anschlusses behindert wird. Die Freimachung ermöglicht ein Zurückschnappen der Kontaktschiene, in dem bevorzugt eine Spitze der Zwangsführung in Endposition in die Freimachung greift.

Durch das Eingreifen eines Abschnittes, insbesondere einer Spitze, der Zwangsführung in die Freimachung, wird der elektrische Anschluss, insbesondere die Kontaktschiene, zumindest teilweise in der Bewegungsfreiheit eingeschränkt, sodass ein Herausrutschen der Kontaktschiene oder des elektrischen Anschlusses aus dem Halter, insbesondere während der Montage, verhindert werden kann. Hierdurch wird die Montage vereinfacht und die Kontaktschiene ist in Endposition spannungsfrei.

Eine weitere Lösung der der Erfindung zugrundeliegenden Aufgabe besteht in der Bereitstellung einer Kontaktverschraubung eines elektrischen Anschlusses, nach Anspruch 10, bevorzugt einer Kontaktschiene, mit einer Zuleitung eines Stators mit einer vorbeschriebenen Vorrichtung.

### Kurze Beschreibung der Figuren

Die Erfindung wird nachstehend anhand der Figuren näher erläutert. Es zeigen:
- Fig. 1: eine perspektivische Ansicht einer Vorrichtung zur Kontaktverschraubung,
- Fig. 2: einen Querschnitt durch eine Aufnahme einer Vorrichtung zur Kontaktverschraubung mit einem Gewindestück,
- Fig. 3a: einen Querschnitt durch ein Gewindestück in einer Aufnahme in einer Neutralstellung,
- Fig. 3b: einen Querschnitt durch ein Gewindestück in einer Aufnahme in einer Anschlagstellung,
- Fig. 4: eine Aufsicht auf eine Vorrichtung zur Kontaktverschraubung an einem Stator einer elektrischen Maschine, und
- Fig. 5: einen Querschnitt durch einer Vorrichtung zur Kontaktverschraubung mit einem Kabelschuh.

### Ausführliche Beschreibung der Figuren

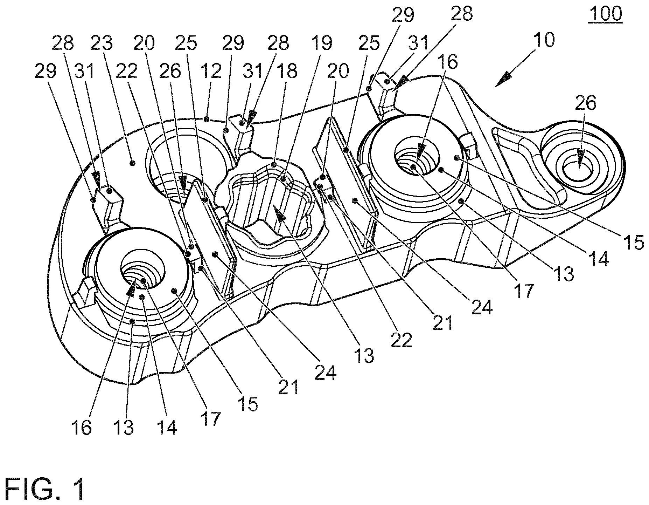

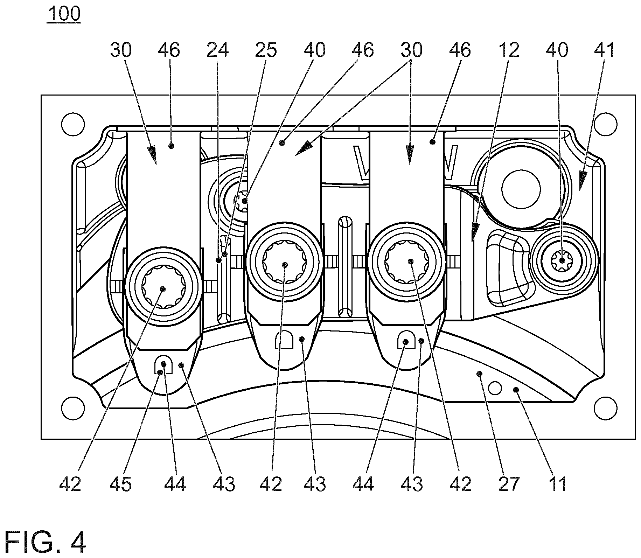

Fig. 1 zeigt eine Vorrichtung 100 zur Kontaktverschraubung, welche als Hochvolt-Kontaktverschraubung 10 für eine elektrische Maschine 11 (Fig. 4) ausgebildet ist. Die Vorrichtung 100 umfasst einen Halter 12, wobei in dem Halter 12 Aufnahmen 13 angeordnet sind. In dem dargestellten Halter 12 sind in zwei der Aufnahmen 13 Gewindestücke 14 angeordnet. Die Gewindestücke 14 sind als Hülsen 15 mit einer Innenbohrung 16 ausgebildet, wobei in der Innenbohrung 16 ein Innengewinde 17 angeordnet ist. Die Aufnahmen 13 weisen ein Innenmitnahmeprofil 18 auf, welches als Innensechsrundprofil 19 ausgebildet ist. Die Gewindestücke 14 sind in den Aufnahmen 13 mittels einer Verliersicherung 20 verliersicher gehalten. Die Verliersicherung 20 umfasst Rastzungen 21 mit Rastnasen 22. Auf der Oberseite 23 des Halters 12 sind Abstandshalter 24 angeordnet, welche als Trennwände 25 ausgebildet sind. Der Halter 12 weist ferner Befestigungslöcher 26 für die Befestigung der Vorrichtung 100 an einem Stator 27 einer elektrischen Maschine 11 auf (Fig. 4).

Ferner sind auf der Oberseite 23 des Halters 12 Vorsprünge 28 angeordnet. Die Vorsprünge 28 dienen als Zwangsführungen 29 zur Führung und Ausrichtung von Kontaktschienen 30 eines Pulswechselrichters (Fig. 4). Die Zwangsführungen 29 weisen eine gegenüber der Oberseite 23 des Halters 12 geneigte Führungsfläche 31 auf.

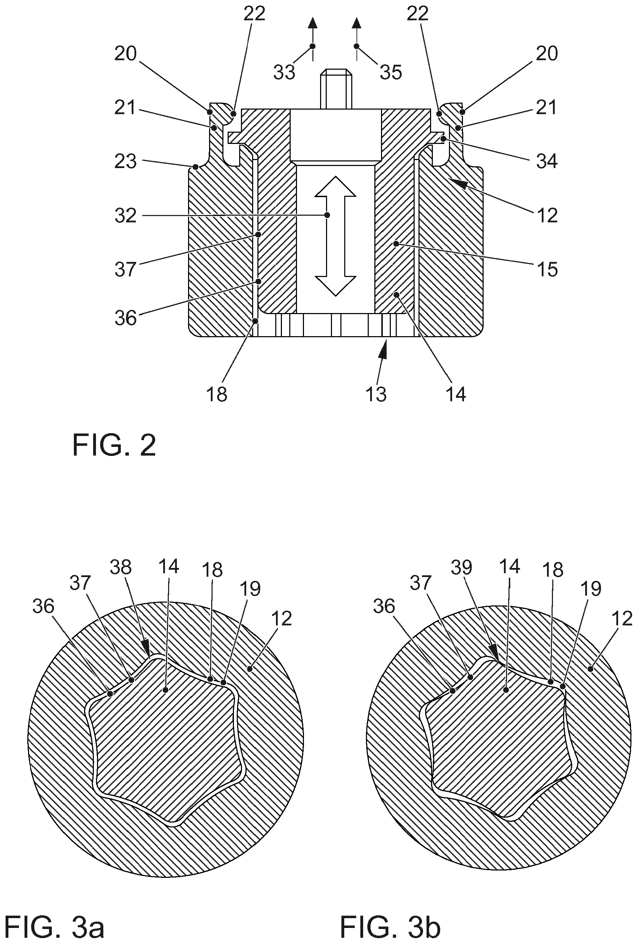

Fig. 2 zeigt einen Querschnitt durch eine Aufnahme 13 des Halters 12. In der Aufnahme 13 des Halters 12 ist das als Hülse 15 ausgebildete Gewindestück 14 angeordnet. Mit dem Pfeil 32 wird eine Verschiebbarkeit des Gewindestücks 14 in einer Axialrichtung 33 in der Aufnahme 13 angedeutet. Das Gewindestück 14 ist in der Aufnahme 13 mittels der Verliersicherung 20 verliersicher gehalten. Die Verliersicherung ist als Rastzungen 21 mit Rastnasen 22 ausgebildet. Ein an der Außenseite des Gewindestücks 14 umlaufender Flansch 34 verhindert zusammen mit der Verliersicherung 20 ein Herausgleiten des Gewindestücks 14 aus der Aufnahme 13. Die Rastzungen 21 der Verliersicherung 20 sind flexibel ausgebildet und können bei Anwendung einer vorbestimmten Kraft durch den Flansch 34 nach außen gebogen werden, sodass das Gewindestück 14 an der Verliersicherung 20 vorbei aus der Aufnahme 13 herausgleiten kann. Die Aufnahme 13 erweitert sich in Richtung der Längsrichtung 35 zur Oberseite 23 des Halters 12 hin. Im dargestellten Zustand, in dem das Gewindestück 14 vollständig in die Aufnahme 13 eingesetzt ist, befindet sich das Gewindestück 14 in einer physischen Anlage mit dem Innenmitnahmeprofil 18 der Aufnahme 13.

Fig. 3a und 3b zeigen einen Querschnitt durch das Gewindestück 14 in der Aufnahme 13 der Fig. 2. Fig. 3a zeigt das Gewindestück 14 in einer Neutralstellung in der Aufnahme 13. Das Gewindestück 14 weist ein als Außensechsrundprofil 36 ausgebildetes Außenmitnahmeprofil 37 auf, welches eine zu dem Innenmitnahmeprofil 18 der Aufnahme 13 im Wesentlichen komplementäre Form aufweist. Zwischen dem Außenmitnahmeprofil 37 des Gewindestücks 14 und dem Innenmitnahmeprofil 18 des Halters 12 ist ein Freiraum 38 vorgesehen, welcher eine axiale und im geringen Umfang auch radiale Bewegungsfreiheit beziehungsweise eine Freiheit gegenüber Verdrehungen des Gewindestücks 14 in der Aufnahme 13 ermöglicht. Fig. 3b zeigt einen Zustand, in dem in das Gewindestück 14 ein Drehmoment eingebracht ist. Durch das Drehmoment ist das Gewindestück 14 in der Aufnahme 13 verdreht, sodass das Außensechsrundprofil 36 an dem Innensechsrundprofil 19 zu einer parallelen Anlage 39 kommt. Durch die parallele Anlage 39 kann das in das Gewindestück 14 eingebrachte Drehmoment abgestützt und die Flächenpressung gering halten werden.

Fig. 4 zeigt eine Aufsicht auf eine an einem Stator 27 einer elektrischen Maschine 11 angeordneten Vorrichtung 100 zur Kontaktverschraubung. Die Vorrichtung 100 ist in einem Gehäuse 41 angeordnet. Der Halter 12 der Vorrichtung 100 ist über Verbindungsschrauben 40 in den Befestigungslöchern 26 an dem Stator 11 befestigt. Seitlich, in der Fig. 4 von oben, sind Kontaktschienen 30 eines Pulswechselrichters in das Gehäuse 41 eingeschoben. Zur elektrischen Isolierung sind zwischen den Kontaktschienen 30 die als Trennwände 25 ausgebildeten Abstandshalter 24 angeordnet. Die Kontaktschienen 30 sind über Schrauben 42 mit dem Halter 12 verbunden und bilden mit Kabelschuhen 43 einen elektrischen Kontakt aus. Durch eine Öffnung 44 in den Kabelschuhen 43 ist eine Zuleitung 45 für den Stator 27 erkennbar. Die Kontaktschienen 30 sind elektrische Anschlüsse 46.

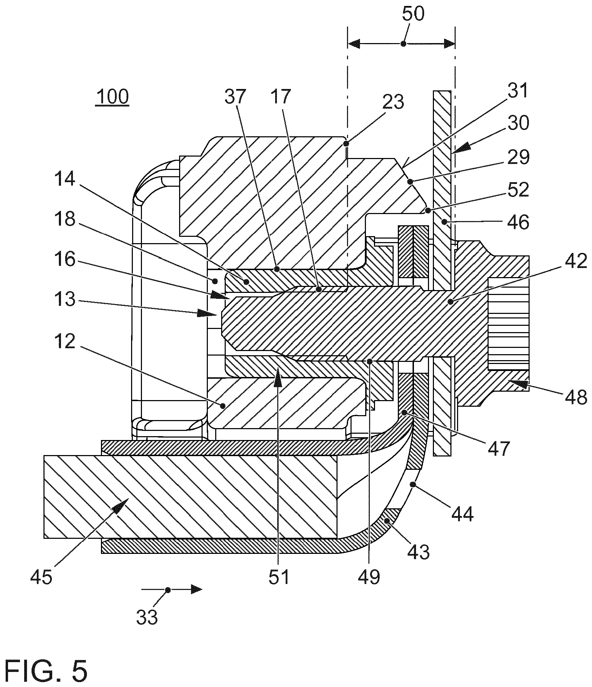

Fig. 5 zeigt einen Querschnitt durch die Vorrichtung 100 der Fig. 4. Mittels der in dem Gewindestück 14 eingeschraubten Schraube 42 wird eine elektrische Kontaktierung zwischen der Kontaktschiene 30 und einem angewinkelten Abschnitt 47 des Kabelschuhs 43 hergestellt, wobei die Kontaktschiene 30 und der abgewinkelte Abschnitt 47 des Kabelschuhs 43 zwischen einem Kopf 48 der Schraube 42 und dem Gewindestück 14 eingeklemmt sind. Die Innenbohrung 16 des Gewindestücks 14 weist ein Innengewinde 17 auf, welches nicht über die gesamte Länge des Gewindestücks 14 ausgebildet ist. Insbesondere ist in der der Oberseite 23 des Halters 12 zugewandten Seite des Gewindestücks 14 eine Gewindefreimachung 49 vorgesehen, in der kein Innengewinde ausgebildet ist. Hierfurch wird die Klemmlänge 50 zwischen dem Kopf 48 der Schraube und dem Innengewinde 17 verlängert, sodass eine größere Klemmkraft durch die Schraube 42 mit dem Gewindestück 14 herstellbar ist. Beim Festdrehen der Schraube 42 bewegt sich das Gewindestück 14 in der Axialrichtung 33 in Richtung der Oberseite 23 des Halters 12. Dabei bewegt sich das Gewindestück 14 aus der Aufnahme 13 heraus, wobei es durch das Innenmitnahmeprofil 18 der Aufnahme 13 und das Außenmitnahmeprofil 37 des Gewindestücks 14 gegenüber Drehmomenten abgestützt wird. Bei dem Herausbewegen des Gewindestücks 14 aus der Aufnahme 13 erhöht sich zudem aufgrund der sich zur Oberseite 23 des Halters erweiternd ausgestalteten Aufnahme 13 die Bewegungsfreiheit des Gewindestücks 14 in der Aufnahme 13. Hierdurch können Toleranzen bei der Verschraubung oder bei der Kontaktierung von Kontaktschiene 30 und abgewinkeltem Abschnitt 47 des Kabelschuhs 43 ausgeglichen werden. Beim Einschrauben der Schraube 42 wird das Gewindestück 14 aus der Aufnahme 13 herausgezogen und kann, sobald eine vorbestimmte Kraft überschritten ist, aus der Verliersicherung 20 (Fig. 1 und 2) herausgezogen werden. Dabei verbleibt das Gewindestück 14 mit einem unteren Bereich 51 in der Aufnahme 13. Das Gewindestück 14 wird in der hergestellten Kontaktverschraubung von der Kontaktverschraubung gehalten und nicht von dem Halter 12 oder der Vorrichtung 100, so dass die verschraubten Elemente Gewindestück 14, Kontaktschiene 30, abgewinkelter Abschnitt 47 des Kabelschuhs 43 und Schraube 42 als Gesamtheit eine Beweglichkeit gegenüber der Vorrichtung 100 bzw. dem Halter 12 oder der Aufnahme 13 aufweisen. Wie der Fig. 5 zu entnehmen ist, liegt die Kontaktschiene 30 bezüglich der Oberseite 23 des Halters 12 oberhalb des abgewinkelten Abschnitts 47 des Kabelschuhs 43. Beim seitlichen Einführen der Kontaktschienen 30 in das Gehäuse 41 (Fig. 4) werden die Kontaktschienen 30 über die Zwangsführungen 29 derart positioniert beziehungsweise gleiten über die Führungsfläche 31 der Zwangsführungen 29, so dass die Kontaktschienen 30 gegenüber dem abgewinkelten Abschnitt 47 des Kabelschuhs 43 richtig positioniert werden. Dabei kann die Spitze 52 der Zwangsführung 29 in eine nicht dargestellte Freimachung oder Bohrung der Kontaktschiene 30 eingreifen, um eine lose Fixierung der Kontaktschiene 30 zu erreichen.

### Bezugszeichenliste

- 100: Vorrichtung
- 10: Hochvolt-Kontaktverschraubung
- 11: Elektrische Maschine
- 12: Halter
- 13: Aufnahme
- 14: Gewindestück
- 15: Hülse
- 16: Innenbohrung
- 17: Innengewinde
- 18: Innenmitnahmeprofil
- 19: Innensechsrundprofil
- 20: Verliersicherung
- 21: Rastzunge
- 22: Rastnase
- 23: Oberseite
- 24: Abstandshalter
- 25: Trennwand
- 26: Befestigungsloch
- 27: Stator
- 28: Vorsprung
- 29: Zwangsführung
- 30: Kontaktschiene
- 31: Führungsfläche
- 32: Pfeil
- 33: Axialrichtung
- 34: Flansch
- 35: Längsrichtung
- 36: Außensechsrundprofil
- 37: Außenmitnahmeprofil
- 38: Freiraum
- 39: Parallele Anlage
- 40: Verbindungsschraube
- 41: Gehäuse
- 42: Schraube
- 43: Kabelschuh
- 44: Öffnung
- 45: Zuleitung
- 46: Elektrischer Anschluss
- 47: Abgewinkelter Abschnitt
- 48: Kopf
- 49: Gewindefreimachung
- 50: Klemmlänge
- 51: Unterer Bereich
- 52: Spitze

## Patentansprüche

1. Vorrichtung (100) zur Herstellung einer Kontaktverschraubung, insbesondere einer Hochvolt-Kontaktverschraubung (10) für eine elektrische Maschine (11), umfassend einen Halter (12) mit einer Aufnahme (13) und eine Verliersicherung (20), wobei in der Aufnahme (13) ein Gewindestück (14) mindestens in einer Axialrichtung (33) des Gewindestücks (14) verschiebbar gehalten ist, wobei das Gewindestück (14) mittels der Verliersicherung (20) verliersicher in der Aufnahme (13) gehalten ist, wobei die Vorrichtung derart ausgebildet ist, dass das Gewindestück (14) in der hergestellten Kontaktverschraubung gegenüber der Vorrichtung verschiebbar ist, wobei die Aufnahme (13) in einer Querschnittsebene ein Innenmitnahmeprofil (18) aufweist, wobei das Gewindestück (14) eine Hülse (15) mit einer Innenbohrung (16) und einem in der Innenbohrung (16) angeordneten Innengewinde (17) ist, wobei das Gewindestück (14) in einer Querschnittsebene ein Außenmitnahmeprofil (37) aufweist, das wobei das Außenmitnahmeprofil (37) eine zu dem Innenmitnahmeprofil (18) im Wesentlichen komplementäre Form aufweist, **dadurch gekennzeichnet, dass** das Innenmitnahmeprofil (18) ein Innenvielrundprofil und das Außenmitnahmeprofil (37) ein Außenvielrundprofil ist, wobei Z die Aufnahme (13) in einer Längsrichtung (35) in Richtung einer Oberseite (23) des Halters (12) sich erweiternd ausgebildet ist, und dass der Durchmesser des Gewindestücks (14) in der Längsrichtung (35) gesehen zunimmt.

2. Vorrichtung (100) nach Anspruch 1, **dadurch gekennzeichnet, dass** die Verliersicherung (20) lösbar ausgebildet ist, sodass das Gewindestück (14) durch Anwendung einer vorbestimmten Kraft in der Axialrichtung (33) von der Verliersicherung (20) gelöst werden kann, und/oder dass die Verliersicherung (20) eine Anformung an den Halter (12) ist, und/oder dass die Verliersicherung (20) flexibel und/oder elastisch ausgebildet ist, und/oder dass die Verliersicherung (20) ausgebildet ist, unter Anwendung der vorbestimmten Kraft zu brechen.

3. Vorrichtung (100) nach Anspruch 1 oder 2, **dadurch gekennzeichnet, dass** die Verliersicherung (20) als mindestens eine Rastzunge (21) mit einer Rastnase (22) ausgebildet ist.

4. Vorrichtung (100) nach einem der vorgenannten Ansprüche, **dadurch gekennzeichnet, dass** das Innenvielrundprofil ein Innensechsrundprofil (19) ist.

5. Vorrichtung (100) nach einem der vorgenannten Ansprüche, **dadurch gekennzeichnet, dass** das Außenvielrundprofil ein Außensechsrundprofil (36) ist.

6. Vorrichtung (100) nach einem der vorgenannten Ansprüche, **dadurch gekennzeichnet, dass** das Innengewinde (17) nicht über die vollständige Länge der Innenbohrung (16) angeordnet ist, und/oder dass das Innengewinde (17) eine Gewindefreimachung (49) aufweist.

7. Vorrichtung (100) nach einem der vorgenannten Ansprüche, **dadurch gekennzeichnet, dass** der Halter (12) zwischen mindestens einer ersten Aufnahme (13) und einer zweiten Aufnahme (13), bevorzugt als Rippen oder Trennwände (25) ausgebildete, Abstandshalter (24) aufweist, und/oder dass der Halter (12), bevorzugt als Vorsprünge (28) ausgebildete, Zwangsführungen (29) für elektrische Anschlüsse (46), insbesondere für Kontaktschienen (30), aufweist, wobei bevorzugt die Zwangsführungen (29) eine gegenüber einer Oberseite (23) des Halters (12) geneigte Führungsfläche (31) aufweisen.

8. Elektrische Maschine (11) umfassend eine Vorrichtung (100) zur Kontaktverschraubung nach einem der Ansprüche 1 bis 7.

9. Elektrische Maschine (11) nach Anspruch 8, **dadurch gekennzeichnet, dass** ein elektrischer Anschluss (46), insbesondere eine Kontaktschiene (30), bevorzugt eine Kontaktschiene (30) für einen Pulswechselrichter, mittels einer in einem Gewindestück (14) des Halters (12) angeordneten Schraube (42) an dem Halter (12) befestigt ist, wobei der elektrische Anschluss (46) zwischen einem Kopf (48) der Schraube (42) und dem Gewindestück (14) angeordnet ist, und/oder dass der Halter (12) einen Kabelschuh (43) aufweist, wobei eine elektrische Zuleitung (45) der elektrischen Maschine (11), insbesondere eines Stators (27), in dem Kabelschuh (43) angeordnet ist, wobei ein abgewinkelter Abschnitt (47) des Kabelschuhs (43) zwischen einem Kopf (48) der Schraube (42) und dem Gewindestück (14) angeordnet ist, sodass ein elektrischer Kontakt zwischen dem Kabelschuh (43) und dem elektrischen Anschluss (46) vorhanden ist.

10. Kontaktverschraubung eines elektrischen Anschlusses, bevorzugt einer Kontaktschiene, mit einer Zuleitung eines Stators mit einer Vorrichtung nach einem der Ansprüche 1 bis 7.

## Claims

1. A device (100) for producing a contact screwing, in particular a high-voltage contact screwing (10) for an electric machine (11), comprising a holder (12) with a receptacle (13) and an anti-loss device (20), wherein a threaded piece (14) is held in the receptacle (13) such that it can be displaced at least in an axial direction (33) of the threaded piece (14); wherein the threaded piece (14) is held in the receptacle (13) in a loss-proof manner by means of the anti-loss device (20); wherein the device is designed in such a way that the threaded piece (14) is displaceable relative to the device in the produced contact screwing; wherein the receptacle (13) has an internal engagement profile (18) in a cross-sectional plane; wherein the threaded piece (14) is a sleeve (15) having an internal bore (16) and an internal thread (17) arranged in the internal bore (16); wherein the threaded piece (14) has an external engagement profile (37) in a cross-sectional plane; wherein the external engagement profile (37) has a shape substantially complementary to the internal engagement profile (18); **characterized in that** the internal engagement profile (18) is an internal multi-profile and the external engagement profile (37) is an external multi-profile, wherein the receptacle (13) is designed to widen in a longitudinal direction (35) in the direction of an upper side (23) of the holder (12), and **in that** the diameter of the threaded piece (14) increases as seen in the longitudinal direction (35).

2. The device (100) according to claim 1, **characterized in that** the anti-loss device (20) is designed to be detachable, so that the threaded piece (14) can be detached from the anti-loss device (20) by applying a predetermined force in the axial direction (33), and/or **in that** the anti-loss device (20) is a shaped piece on the holder (12), and/or **in that** the anti-loss device (20) is designed to be flexible and/or elastic, and/or **in that** the anti-loss device (20) is designed to break under application of the predetermined force.

3. The device (100) according to claim 1 or 2, **characterized in that** the anti-loss device (20) is designed as at least one latching tongue (21) with a latching lug (22).

4. The device (100) according to one of the aforementioned claims, **characterized in that** the inner multi-profile is an inner hexagonal profile (19).

5. The device (100) according to one of the aforementioned claims, **characterized in that** the outer multi-profile is an outer hexagonal profile (36).

6. The device (100) according to one of the aforementioned claims, **characterized in that** the internal thread (17) is not arranged over the full length of the internal bore (16), and/or **in that** the internal thread (17) has a thread release (49).

7. The device (100) according to one of the aforementioned claims, **characterized in that** the holder (12) has spacers (24), preferably designed as fins or partitions (25), between at least one first receptacle (13) and a second receptacle (13), and/or **in that** the holder (12), preferably in the form of projections (28), has constraining guides (29) for electrical connections (46), in particular for contact bars (30), wherein the constraining guides (29) preferably have a guide surface (31) that is inclined with respect to an upper side (23) of the holder (12).

8. An electric machine (11) comprising a device (100) for contact screwing according to one of the claims 1 to 7.

9. The electric machine (11) according to claim 8, **characterized in that** an electrical connection (46), in particular a contact bar (30), preferably a contact bar (30) for a pulse inverter, is fastened to the holder (12) by means of a screw (42) arranged in a threaded piece (14) of the holder (12), wherein the electrical connection (46) is arranged between a head (48) of the screw (42) and the threaded piece (14), and/or in that the holder (12) has a cable lug (43); wherein an electrical supply line (45) of the electric machine (11), in particular of a stator (27), is arranged in the cable lug (43); wherein an angled segment (47) of the cable lug (43) is arranged between a head (48) of the screw (42) and the threaded piece (14), so that an electrical contact is present between the cable lug (43) and the electrical connection (46).

10. A contact screwing of an electrical connection, preferably of a contact bar, with a supply line of a stator, with a device according to one of the claims 1 to 7.

## Revendications

1. Dispositif (100) pour la réalisation d'un vissage de contact, en particulier un vissage de contact haute tension (10) pour une machine électrique (11) comprenant un support (12) comprenant un logement (13) et un dispositif de protection contre la perte (20), une pièce filetée (14) étant maintenue dans le logement (13) de manière déplaçable au moins dans une direction axiale (33) de la pièce filetée (14), la pièce filetée (14) étant maintenue dans le logement (13) de manière sûre contre la perte au moyen du dispositif de protection contre la perte (20), le dispositif étant formé de telle façon que la pièce filetée (14) peut être déplacée par rapport au dispositif dans le vissage de contact créé, le logement (13) présentant un profil d'entraînement interne (18) dans le plan de section transversale, la pièce filetée (14) étant une douille (15) comprenant un alésage interne (16) et un filetage interne (17) disposé dans l'alésage interne (16), la pièce filetée (14) présentant un profil d'entraînement externe (37) dans un plan de section transversale, le profil d'entraînement externe (37) présentant une forme essentiellement complémentaire à celle du profil d'entraînement (18), **caractérisé en ce que** le profil d'entraînement interne (18) est un profil à rondes multiples interne et le profil d'entraînement externe (37) est un profil à rondes multiples externe, le logement (13) étant formé s'évasant dans une direction longitudinale (35) dans la direction d'une face supérieure (23) du support (12), et **en ce que** le diamètre de la pièce filetée (14) augmente vu dans la direction longitudinale (35).

2. Dispositif (100) selon la revendication 1, **caractérisé en ce que** le dispositif de protection contre la perte (20) est formé amovible, de telle sorte que la pièce filetée (14) puisse être séparée du dispositif de protection contre la perte (20) par l'application d'une force prédéterminée dans la direction axiale (33), **et/ou en ce que** le dispositif de protection contre la perte (20) est une formation sur le support (12), **et/ou en ce que** le dispositif de protection contre la perte (20) est conçu flexible et/ou élastique, **et/ou en ce que** le dispositif de protection contre la perte (20) est formé pour se casser sous l'application de la force prédéterminée.

3. Dispositif (100) selon la revendication 1 ou 2, **caractérisé en ce que** le dispositif de protection contre la perte (20) est formé comme au moins une languette d'encliquetage (21) comprenant un nez d'encliquetage (22).

4. Dispositif (100) selon l'une quelconque des revendications précédentes, **caractérisé en ce que** le profil à rondes multiples interne est un profil à six rondes interne (19).

5. Dispositif (100) selon l'une quelconque des revendications précédentes, **caractérisé en ce que** le profil à rondes multiples externe est un profil à six rondes externe (36).

6. Dispositif (100) selon l'une quelconque des revendications précédentes, **caractérisé en ce que** le filetage interne (17) n'est pas disposé sur la longueur complète de l'alésage interne (16) **et/ou en ce que** le filetage interne (17) présente une libération de filetage (49).

7. Dispositif (100) selon l'une quelconque des revendications précédentes, **caractérisé en ce que** le support (12) présente des écarteurs (24) formés entre au moins un premier logement (13) et un deuxième logement (13), de préférence comme des nervures ou des cloisons de séparation (25), **et/ou en ce que** le support (12) présente des guidages forcés (29) pour des raccords électriques (46), en particulier pour des rails de contact (30), formés comme des saillies (28), les guidages forcés (29) présentant de préférence une surface de guidage (31) inclinée par rapport à une surface supérieure (23) du support (12).

8. Machine électrique (11) comprenant un dispositif (100) de vissage de contact selon l'une quelconque des revendications 1 à 7.

9. Machine électrique (11) selon la revendication 8, **caractérisée en ce qu**'un raccord électrique (46), en particulier un rail de contact (30), de préférence un rail de contact (30) pour un onduleur à impulsions, est fixé au support (12) au moyen d'une vis (42) disposée dans une pièce filetée (14) du support (12), le raccord électrique (46) étant disposé entre une tête (48) de la vis (42) et la pièce filetée (14), **et/ou en ce que** le support (12) présente une cosse de câble (43), une alimentation électrique (45) de la machine électrique (11), en particulier d'un stator (27), étant disposée dans la cosse de câble (43), une section coudée (47) de la cosse de câble (43) étant disposée entre une tête (48) de la vis (42) et la pièce filetée (14), de telle sorte qu'un contact électrique entre la cosse de câble (43) et le raccord électrique (46) soit établi.

10. Vissage de contact d'un raccord électrique, de préférence d'un rail de contact, comprenant une alimentation d'un stator au moyen d'un dispositif selon l'une quelconque des revendications 1 à 7.
